# EUROPEAN PATENT APPLICATION

(11) **EP 2 336 721 A1**
(43) Date of publication of application: **22.06.2011**
(21) Application number: 09015817.1
(22) Date of filing: 21.12.2009
(51) Int. Cl.: G01C 21/16, G01S 5/14

(54) **Fault detection methods**

(71) Applicant: Converteam Technology Ltd, Rugby Warwickshire CV22 6QA (GB)
(72) Inventor: Stephens, Richard, Ian, Rugby Warwickshire CV22 6QA (GB)
(74) Representative: Serjeants

(57) **Abstract**

A fault detection method uses inertial measurements provided by an inertial measurement unit (IMU) (2) to detect faults in position measurement equipment (PME) (4). The method uses at least one inertial measurement (*α*(*t-N*)*...α*(*t*)) to derive at least one unaided position estimate (*x*(*t-N*)*...x*(*t*)) in an unaided solution function block (12). This is then compared with at least one position measurement (*p*(*t-N*)*...p*(*t*)) provided by the PME (4) in a fault detection function block (14) to determine if there is a fault in the PME. An earlier inertial measurement (*α*(*t-N*+1)) and an earlier position measurement (*p*(*t-N*+1)) can be used to derive an aided position estimate (*x'*(*t-N*+1)) in an aided solution function block (10). The aided position estimate (*x'*(*t-N*+1)) can be used as a start condition to the step of deriving the at least one unaided position estimate (*x*(*t-N*)...*x*(*t*)). The aided and unaided solution function blocks (10, 12) can be implemented as a Kalman filter.

## Description

### Technical Field

The present invention relates to fault detection methods, and in particular to methods where an inertial navigation system (INS) can be used to detect faults in position measurement equipment (PME). The PME can be used for the dynamic positioning (DP) of marine vessels, i.e. the use of thrusters to maintain the position of a vessel in the vicinity of a reference point and stabilise its heading, in opposition to environmental forces such as wind and current.

The term "inertial navigation system (INS)" is intended to include systems that contain an inertial measurement unit (IMU), which is normally a lower-level measurement system with an internal or external data fusion algorithm.

The term "dynamic positioning (DP) system" is intended to include other positioning systems for vessels such as position mooring systems and thruster-assisted mooring systems which combine aspects of a DP system with a mooring system.

### Background Art

The fundamental components of a dynamic positioning (DP) system are: one or more position reference systems to measure the vessel position and heading; thrusters to apply control action; and a controller to determine the required thrusts. The object of a DP system is not to hold the vessel absolutely stationary, but to maintain its station within acceptable limits. The magnitude of the permitted position variation is dependent upon the application and on operational concerns. In many applications a loss of position beyond the acceptable limits may have a severe impact either on the safety of personnel or equipment, or on the environment. It is vital, therefore, that adequate measurements are taken to maintain the integrity of the DP system as far as is reasonably possible.

Safe operation in DP relies upon accurate measurement of the vessel position and heading at all times. In order to ensure that this is true, even under fault conditions, all measurement systems include redundancy. Physical redundancy requires the replication of equipment to ensure that a single failure of any piece of equipment will not result in complete failure of the overall system and allows faulty equipment to be by-passed using the redundant hardware. The parallel redundant systems must be independent, i.e. no single failure mode should be capable of disabling the overall system.

The DP system combines all available measurements of position, from whatever source, into a single estimate of vessel position. The algorithm for combining the position measurements can be based on a Kalman filter.

The sources of position measurements can include a wide variety of position measurement equipment (PME) such as gyrocompasses (which offer compact, reliable and accurate measurement of vessel heading (yaw), independent of outside disturbances), taut wires, satellite navigation systems (which include global positioning systems (GPS) and differential GPS (DGPS)), inertial navigation systems (INS), and hydro-acoustic positioning systems. The PME could also be a system that provides velocity measurement e.g. a Doppler-velocity log (DVL).

An INS uses acceleration measurements to estimate the motion of a vessel in an inertial reference frame. A typical INS will include an inertial measurement unit (IMU) containing a cluster of sensors such as accelerometer and gyros that sense linear acceleration (typically in three orthogonal directions) and rotation rates, respectively. The acceleration measurements provided by the IMU are normally processed to compensate for sensor errors and gravity and are then integrated twice to provide an estimate of velocity and position. The inherent noise in the acceleration measurements and other inaccuracies result in unavoidable drift of the position estimates provided by the INS. A position estimate that is based solely on an INS is sometimes referred to as an "unaided" position estimate because of the unavoidable drift.

It is therefore usual for the drift to be compensated by combining the INS position estimates with independent position measurements provided by another PME unit. Typically, a Kalman filter is used to combine the position estimates from the INS and the position measurements from the other PME in order to identify and maintain an estimate of offsets and drifts in the accelerometers and gyros. Such an arrangement is often referred to as "PME aided INS" because it provides an "aided" position estimate where the drift is at least partially compensated for.

The likely drift of position estimates during periods when the position estimates provided by the INS are not being compensated (e.g. because of PME outage or failure) has been determined experimentally in "Integration of an inertial navigation system and DP" by Stephens, R.I, Cretollier, F., Morvan, P.-Y., and Chamberlain, , A.G., Dynamic Positioning Conference, 7-8 October 2008, Houston, Texas, United States of America*.* The drift after about 60 seconds is likely to be less than about 2 metres, and the drift after 120 seconds is likely to be less than about 5 metres. This suggests that an INS can be used to provide unaided position estimates for short periods without the need for any sort of drift compensation.

It can be difficult to detect faults in PME. Various different methods are known including median checks, step detection and noise detection. However, the most reliable method for fault detection relies on having multiple PME units to allow a comparison of different position measurements. When the DP system uses only one or two PME units then the methods for fault detection are limited. For example, with only two PME units available then a drift can be detected but the faulty PME cannot be identified without further information.

There is therefore a need for an improved fault detection system for PME units. Such an improved fault detection system could be used in a DP system where reliability is extremely important such as for drilling vessels, shuttle tankers and supply vessels.

### Summary of the Invention

The present invention is directed to a method of using the inertial measurements from an inertial measurement unit (IMU) to detect the presence of a fault in one or more position measurement equipment (PME) that would typically form part of a dynamic positioning (DP) system. The IMU may form part of an inertial navigation system (INS). In a preferred fault detection method the inertial measurements from the IMU are stored and used to derive independent "unaided" position or velocity estimates on the basis that the PME was operating correctly at some previous time and that any short term drift in the unaided position or velocity estimates is small compared to the error or discrepancy that is to be detected.

More particularly, the present invention provides a method of using inertial measurements provided by an IMU to detect a fault in PME providing position or velocity measurements, the method comprising the steps of: using at least one inertial measurement to derive at least one unaided position or velocity estimate; and comparing the at least one unaided position or velocity estimate with at least one position or velocity measurement provided by the PME to determine if there is a fault in the PME.

If there is a fault in the PME then this will result in an error or discrepancy between the at least one position or velocity measurement and the at least one unaided position or velocity estimate. The detection of an error or discrepancy can therefore be used to check if the PME is operating properly or not.

The fault detection method assumes: (i) that at some previous time (e.g. *N*+1 seconds ago) the PME was operating properly such that the position or velocity measurement provided at that previous time (e.g. at *t-*(*N*+1) seconds) was error-free, and (ii) that the drift in the inertial measurements provided by the IMU since that previous time (e.g. for the last *N*+1 seconds) is small compared to the error or discrepancy to be detected. The larger the value of N the better the discrimination of faults such as drift. For example, with a linear drift rate of *r* metres per second the residual will be *N.r* metres so making the value of *N* larger improves the noise rejection. The practical value of N that can be used depends on the quality of the IMU, the required fault detection rate etc. For a typical IMU it is expected that a value of N=60 seconds could be used to detect errors of perhaps 6 metres or more.

The inertial measurements provided by the IMU will normally include linear accelerations (typically in three orthogonal directions) and rotation rates. These can be combined to form an acceleration vector *a*(*t*)*.* Position or velocity measurements *p*(*t*) provided by the PME can be in the form of spatial coordinates or absolute position on the earth, for example. Velocity measurement provided by the PME can be in the form of a Doppler velocity log (DVL), for example. The IMU and PME will provide inertial measurements and position or velocity measurements at any suitable update rate, for example once a second.

Inertial measurements and position or velocity measurements are preferably stored in separate buffers. If more than one PME is used then each will typically have its own buffer for storing its respective position or velocity measurements.

In a typical example an acceleration vector and a position or velocity measurement might be added to the buffer once every second so that after *N*+1 seconds each buffer would include *N*+ 1 acceleration vectors and position or velocity measurements. Each buffer will normally hold a maximum of *N*+1 acceleration vectors and position or velocity measurements. The buffers can be filled during a preliminary or start-up process during which no fault detection normally takes place or preset to an arbitrary initial value (e.g. zero). Once the buffers are full then as subsequent acceleration vectors and position or velocity measurements are provided by the IMU and PME, respectively, the oldest acceleration vectors and position or velocity measurements are simply discarded from the buffers. During normal operation of the fault detection method each buffer will therefore typically contain the most recent acceleration vectors and position or velocity measurements in the form of *a*(*t-*(*N*+1))*,* a(*t-N*) ... a(*t-*1), *a(t)* and *p*(*t-*(*N*+1))*, p*(*t-N*)*...p*(*t-*1)*, p(t).*

In a preferred arrangement an earlier inertial measurement provided by the inertial measurement unit (e.g. for a time *t-*(*N*+1)) is combined with an earlier position or velocity measurement provided by the PME (e.g. for a time *t-*(*N*+1)) to derive an "aided" position or velocity estimate. The aided position or velocity estimate is then preferably used as a start condition to derive the at least one unaided position or velocity estimate as described in more detail below.

At each iteration of the fault detection method (typically once every second) the following steps are preferably carried out for a time *t*:
1. An aided position or velocity estimate for time *t-*(*N*+1) (e.g. *x'*(*t-*(*N*+1))) for that iteration is derived by combining an inertial measurement for time *t-*(*N*+1) (e.g. acceleration vector *a*(*t-*(*N*+ 1))) and a position or velocity measurement for time *t-*(*N*+1) (e.g. position or velocity measurement p(t-(N+ 1)))*.*
2. The aided position or velocity estimate for *t-*(*N*+1) (e.g. *x'*(*t-*(*N*+1))) is used as a start condition to a process that derives the at least one unaided position or velocity estimate from stored inertial measurements for time *t-N* to time *t* (e.g. the buffered acceleration vectors *α*(*t-N*)*...α*(*t-*1)*,* a*(t)).*

For example, using the aided position or velocity estimate *x'*(*t-*(*N*+1)) as a start condition the process may derive a first unaided position or velocity estimate *x*(*t-N*) from the acceleration vector *α*(*t-N*)*;* a second unaided position or velocity estimate *x*(*t-*(*N*-1)) from the acceleration vector *α*(*t-*(*N*-1))*;* a third unaided position or velocity estimate x(t-(N-2)) from the acceleration vector *α*(*t-*(*N*-2)); and so on until a final unaided position or velocity estimate x(t) is derived from the acceleration vector *a*(*t*). In other words, for each iteration the buffered acceleration vectors *α*(*t-N*)*...α*(*t-*1)*, α*(*t*) can be used to derive a series of unaided position or velocity estimates *x*(*t-N*)*...x*(*t-*1)*, x(t)* for all time steps between *t-N* and *t*. The aided position or velocity estimate that is used as a start condition is derived from an earlier position or velocity measurement provided by the position measurement equipment (e.g. for a time *t-*(*N+*1))*.* It will therefore be readily appreciated that for each iteration of the fault detection method the buffered position or velocity measurement and acceleration vectors for time *t-*(*N*+1) are used to derive the aided position or velocity estimate while the remaining buffered acceleration vectors for all time steps between *t-N* and *t* are used to derive the series of unaided position or velocity estimates *x*(*t-N*)*...x*(*t*-1)*, x(t).* The processing of the buffered position or velocity measurements and acceleration vectors to derive the series of unaided position or velocity estimates will be completed in a time that is less than the iteration rate of the fault detection method.

The aided position or velocity estimate *x'*(*t-*(*N*+1)) is preferably used as a start condition to derive the first unaided position or velocity estimate *x*(*t-N*) and the process to derive each subsequent unaided position or velocity estimate may make use of the previously derived unaided position or velocity estimate.

The fault detection method may make use of all or part of the series of unaided position or velocity estimates or just one of the unaided position or velocity estimates (*e.g. x*(*t*))*.*

20 The step of comparing the at least-one unaided position or velocity estimate with at least one position or velocity measurement provided by the PME to determine if there is a fault in the PME may be implemented in many different ways and may make use of all or part of the buffered position or velocity measurements *p*(*t-N*)*...p*(*t*-1)*, p*(*t*) or just one of the unaided position or velocity estimates (e.g. *p*(*t*))*.* For example, if each iteration of the fault detection method provides one unaided position or velocity estimate for time *t* (e.g. *x(t))* then this can be compared directly with the position or velocity measurement for time *t* (e.g*. p(t))* that is provided by the PME. If the error between the unaided position or velocity estimate *x*(*t*) and the position or velocity measurement *p*(*t*) exceeds a particular threshold, say m metres, for example, then the particular iteration might be flagged to indicate the possibility of a fault. Flagged iterations may be monitored using a suitable algorithm to try and avoid false error determinations. For example, the fault detection method may look for a certain number of consecutive flagged iterations or a certain number of flagged iterations in a certain period of time before a final fault determination is made. An alternative is to compare all or part of the series of unaided position or velocity estimates for time *t-N* to time *t* (e.g. *x*(*t-N*)*...x*(*t*-1)*, x*(*t*)) against the series of position or velocity measurements for time *t-N* to time *t* (e.g. the buffered position or velocity measurements *p*(*t-N*)*...p*(*t*-1)*, p*(*t*)) using some sort of mathematical algorithm. Each iteration would therefore make use of all or part of the position or velocity measurements for the previous *N* seconds.

Other possible fault detection techniques might look for discontinuities or particular variations (e.g. step changes) in the distribution of the error between all or part of the series of unaided position or velocity estimates and all or part of the series of position or velocity measurements over time.

The unaided position or velocity estimates provided by each iteration of the fault detection method can also be stored or buffered and combined using any suitable mathematical algorithm before being used to determine if there is a fault in the PME.

The aided and unaided position or velocity estimates are preferably derived using a recursive algorithm such as a Kalman filter. For both the aided-and unaided position or velocity estimates it is important to note that the recursive algorithm uses inertial measurements provided by the IMU (e.g. linear accelerations and rotation rates that can be combined to form an acceleration vector *α*(*t*)) to derive an estimate of position. A preliminary step might therefore include deriving an inertial solution in the form of position and velocity estimates from the inertial measurements.

The at least one unaided position or velocity estimate can be compared with at least one position or velocity measurement provided by a single PME. For example, the fault detection method can rely on position or velocity measurements from a single PME such as a satellite navigation system (e.g. GPS and differential GPS (DGPS)). However, it is also possible to provide an alternative inertial navigation architecture with two or more PME located in parallel. In this case the fault detection method may derive separate aided and unaided position or velocity estimates for each PME in the manner described above. Alternatively, the aided position or velocity estimate for each iteration of the fault detection method may be derived by using the earlier position or velocity measurements provided by one or more of the PME. Different combinations of PME could be selected for the derivation of the aided position or velocity estimate by appropriate switching between position or velocity measurements using a switch array and switch controller. The aided position or velocity estimate for each iteration may also be derived from a combination (e.g. a weighted combination or average) of the earlier position or velocity measurements provided by two or more of the PME. Fault detection may be applied to one or more of the PME, and any PME that is checked for faults need not necessarily be the one whose earlier position or velocity measurements are used to derive the aided position or velocity estimates. In other words, for each iteration of the fault detection method a first PME can provide an earlier position or velocity measurement that is used to derive the aided position or velocity estimate while a second PME can provide at least one position or velocity measurement to be compared with the at least one unaided position or velocity estimate to determine if there is a fault in the second PME.

The fault detection method may be used as part of a DP system for a marine vessel. In this case, the inertial measurements provided by the IMU (or position or velocity estimates provided by an INS that incorporates the IMU) and position or velocity measurements provided by the PME may also be combined in a separate process to derive an estimate of the position or speed of the marine vessel.

The present invention further provides a fault detection system (or inertial navigation architecture) comprising: an IMU providing inertial measurements; at least one PME providing position or velocity measurements; means for deriving at least one unaided position or velocity estimate using at least one inertial measurement; and means for comparing the at least one unaided position or velocity estimate with at least one position or velocity measurement provided by the PME to determine if there is a fault in the PME.

The fault detection system preferably also includes means for deriving an aided position or velocity estimate using an inertial measurement and a position or velocity measurement.

Separate buffers may be provided to store inertial measurements provided by the IMU and position or velocity measurements provided by the PME.

The means for deriving at least one unaided position or velocity estimate and the at least one aided position or velocity estimate is preferably a Kalman filter. More particularly, the unaided and aided position or velocity estimates may be derived by a single Kalman filter or by separate Kalman filters running in parallel.

The fault detection system may be adapted or configured to implement the fault detection method described in more detail above.

### Drawings

Figure 1 is a schematic drawing showing the overall architecture for a first fault detection system according to the present invention with a single position measurement;
Figure 2 is a schematic drawing showing the contents of the aided solutions function block of Figure 1;
Figure 3 is a schematic drawing showing how the unaided solutions for time *t-N* to time *t* are determined in sequence for each iteration of the fault detection method;
Figure 4 is a schematic drawing showing the contents of one of the unaided solution function blocks of Figure 3;
Figure 5 is a graph on which the errors between the unaided position estimates and respective position measurements are plotted over a period of time;
Figure 6 is a schematic drawing showing the overall architecture for a second fault detection system according to the present invention with first and second position measurement equipment (PME) units, both first and second PME providing position measurements in parallel to derive separate aided position estimates for each iteration and for fault detection;
Figure 7 is a schematic drawing showing the overall architecture for a third fault detection system according to the present invention with first and second PME units, the first and second PME providing position measurements that are combined to derive an aided position estimate for each iteration and where the position measurements provided by the first PME only are used for fault detection;
Figure 8 is a schematic drawing showing the overall architecture for a fourth fault detection system according to the present invention with first and second PME units, the first PME providing a position measurement to derive an aided position estimate for each iteration and the second PME providing position measurements for fault detection.

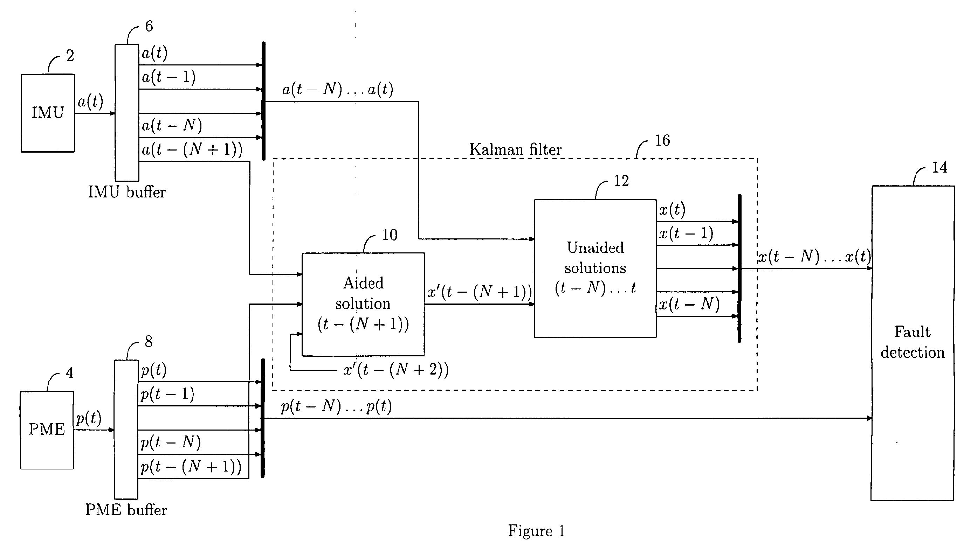

With reference to Figure 1 a first fault detection system includes an inertial measurement unit (IMU) 2 that can form part of an inertial navigation system (INS). The IMU 2 contains a cluster of sensors such as accelerometers and gyros that sense linear acceleration (typically in three orthogonal directions) and rotation rates, respectively. The inertial measurements provided by the IMU 2 for a time *t* are combined to form an acceleration vector *α*(*t*)*.*

Position measurements can be provided by any suitable position measurement equipment (PME) 4 such as a GPS receiver. Position measurements *p*(*t*) provided by the PME 4 for a time *t* can be in the form of spatial coordinates or absolute position on the earth for example. Although the following description refers to position measurement only, it will be readily appreciated that the PME might also provide velocity measurements (e.g. in the form of a Doppler velocity log (DVL)) in which case the fault detection system would be configured to compare these velocity measurements with unaided velocity measurements derived in a similar way to the unaided position measurements.

The IMU 2 and PME 4 form part of a dynamic position (DP) system for a marine vessel.

An acceleration vector and position measurement is provided by the IMU 2 and PME 4 each second and stored in buffers. More particularly, the acceleration vectors for a time *t-*(*N*+1) to time *t* are stored in an IMU buffer 6 and the position measurements for a time *t-*(*N*+1) to time *t* are stored in a PME buffer 8. In other words, if *N=60* seconds then each buffer will store a total of 61 separate acceleration vectors and position measurements provided by the IMU 2 and the PME 4 over the preceding 61 seconds. In practice the acceleration vectors and position measurements provided by the IMU 2 and PME 4 might arrive at different rates so the fault detection system will usually have some way of synchronising the measurements. This might involve ignoring any additional measurements or averaging measurements over the particular period of time. There will also usually be some way of dealing with missing measurements from either the IMU 2 or PME 4, perhaps by assuming that any missing measurement is the same as the previous one.

The buffers 6, 8 may be filled sequentially with acceleration vectors and position measurements during a preliminary or start-up process during which no fault detection would normally take place. Alternatively, the buffers may be preset to an arbitrary value (e.g. zero). Once the buffers 6, 8 are full then as subsequent acceleration vectors and position measurements are provided by the IMU 2 and PME 4 each second the oldest acceleration vectors and position measurements are simply discarded from the buffers. During normal operation of the fault detection method each buffer 6, 8 will therefore contain the most recent acceleration vectors and position measurements in the form of *α*(*t-*(*N*+1)), a(*t-N*)*...α*(*t*-1)*, α*(*t*) *and p*(*t-*(*N*+1)), *p*(*t-N*)*...p*(*t*-1)*, p*(*t*) for a time *t-(N*+1) to time *t*.

The fault detection method runs as a number of iterations. In this example an iteration takes place every second but it will be readily appreciated that other iteration rates can be used.

For an iteration at time *t* then the following steps are carried out:
1. An aided position estimate *x'*(*t-*(*N*+1)) is derived in an aided solution function block 10;
2. A series of unaided position estimates *x*(*t-N*)*...x*(*t*-1)*, x(t)* are derived in an unaided solution function block 12; and
3. An unaided position estimate x(t) is compared to a position measurement *p*(*t*) in a fault detection function block 14 to determine if the PME 4 is operating properly.

The aided and unaided solution function blocks form part of a Kalman filter 16.

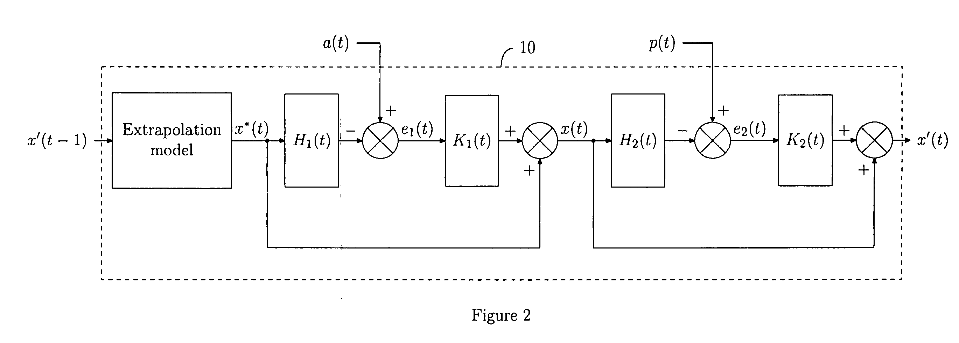

Each step above will now be explained in more detail with reference to Figures 2 to 5.

Figure 2 shows the contents of the aided solution function block 10. Essentially the aided solution function block 10 derives an aided position estimate x'(t) (which is typically in the form of a vector) by combining together the previous aided position estimate *x'*(*t*-1) with an acceleration vector *α*(*t*) provided by the IMU 2 and a position measurement *p*(*t*) provided by the PME 4. It will be readily appreciated that for an iteration of the fault detection method for a time *t*-the acceleration vector that is used-will be the buffered acceleration vector *α*(*t-*(*N*+1)) and the position measurement that is used will be the buffered position measurement *p*(*t-*(*N*+1)).

The first input to the aided solution function block 10 is the previous aided position estimate *x'*(*t*-1). A mathematical model is used to extrapolate this vector forwards to time *t* producing an uncorrected, extrapolated, vector *x**(*t*). *H*₁*(t)* is a mathematical model which extracts a prediction of accelerations and rotations of the marine vessel for comparison with the acceleration vector *α*(*t*) provided by the IMU 2. The error *e*₁(*t*) between the predicted accelerations and rotations and the acceleration vector *a*(*t*) is multiplied by a gain matrix *K*₁,(*t*) (typically referred to as the Kalman gain matrix) to produce a correction vector, which is added to the extrapolated vector *x**(*t*) to produce an unaided position estimate *x(t). H*₂(*t*) is a mathematical model which extracts a prediction of the position of the marine vessel for comparison with the position measurement *p*(*t*) provided by the PME 4. The error *e*₂(*t*) between the predicted position and the position measurement *p*(*t*) is multiplied by a gain matrix *K₂*(*t*) to produce an additional correction vector, which is added to the unaided position estimate x(t) to produce an aided position estimate *x'*(*t*).

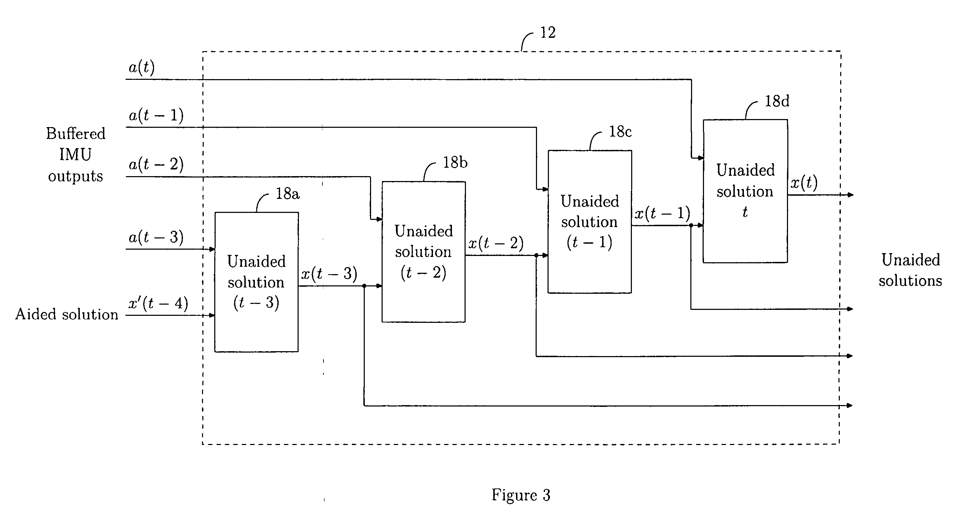

Figure 3 shows the contents of the unaided solutions function block 12. Essentially the unaided solutions function block 12 derives a series of unaided position estimates *x*(*t-N*)*...x*(*t*-1)*,* x(t) (which are typically in the form of vector series) from the buffered acceleration vectors *α*(*t-N*)*...a*(*t*-1)*,* a(*t*) and the previous unaided (or aided) position estimate. All of the series of unaided position estimates *x*(*t-N)...x*(*t*-1)*, x(t)* are derived for each iteration of the fault detection method. In other words, the unaided solutions function block 12 uses all of the buffered acceleration vectors for time *t-N to* time *t* during each iteration of the fault detection method and all of the processing to derive the series of unaided position estimates *x*(*t-N*)*...x*(*t*-1)*, x(t)* for an iteration at time *t* is completed before the next iteration at time *t*+1.

For clarity, Figure 3 shows a situation where *N*=3 seconds. The aided position estimate *x*'(*t*-4) that is derived from the aided solution function block 10 is used as a start condition to a first function block 18a. The aided position estimate *x'*(*t*-4) is combined with a buffered acceleration vector *α*(*t*-3) in the first function block 18a to derive a first unaided position estimate x(t-3). The first unaided position estimate *x*(*t*-3) is combined with a buffered acceleration vector *α*(*t*-2) in the second function block 18b to derive a first unaided position estimate *x*(*t*-2) and so on to provide a series of unaided position estimates *x*(*t*-3)*...x*(*t*-1)*, x(t).*

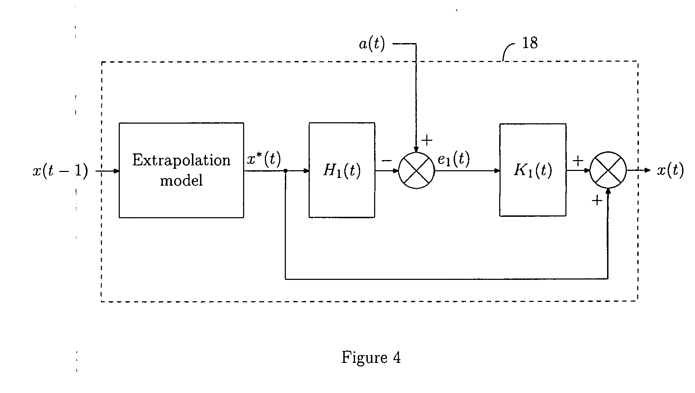

The function blocks 18a to 18d will now be described in more detail with reference to Figure 4. Essentially each function block 18a to 18d derives an unaided position estimate x(t) by combining together the previous unaided position estimate *x*(*t*-1) (or in the case of the first function block 18a, the previous aided position estimate *x'*(*t*-1)) with an acceleration vector *α*(*t*) provided by the IMU 2. It will be readily appreciated that for an iteration of the fault detection method for a time *t* the acceleration vector that is used in function block 18a will be the buffered acceleration vector *α*(*t-N*)*,* the acceleration vector that is used in function block 18b will be the buffered acceleration vector *α*(*t-*(*N*-1)) and so on. The function block 18a will use as its start condition the aided position estimate *x'*(*t-*(*N*+1)) that is provided by the aided solution function block 10 and which in turn is derived for the same iteration of the fault detection method for a time *t* using the buffered acceleration vector *α*(*t-*(*N*+1)) and the buffered position measurement *p*(*t-*(*N*+1)) as described above.

The first input to the function block 18a is the previous aided position estimate *x*'(*t*-1) and the first input to each subsequent function block 18b to 18d is the previous unaided position estimate *x*(*t*-1) derived by the previous function block in the series. A mathematical model is used to extrapolate this vector forwards to time *t* producing an uncorrected, extrapolated, vector *x**(*t*)*. H*₁(*t*) is a mathematical model which extracts a prediction of accelerations and rotations of the marine vessel for comparison with the acceleration vector *a*(*t*) provided by the IMU 2. The error *e*₁(*t*) between the predicted accelerations and rotations and the acceleration vector *α*(*t*) is multiplied by a gain matrix *K*₁(*t*) to produce a correction vector, which is added to the extrapolated vector *x**(*t*) to produce an unaided position estimate *x*(t).

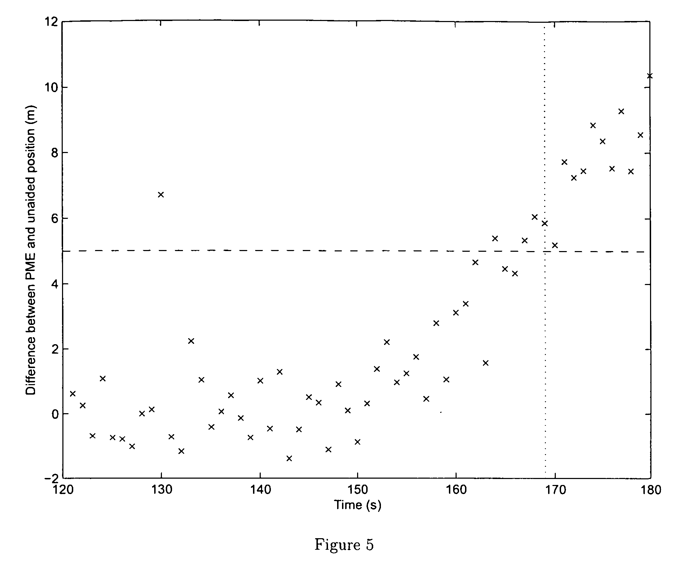

The-fault detection method―may make use of all or part of the series of-unaided position estimates or just one of the unaided position estimates. An example of the detection of PME drift is shown in Figure 5. The points marked with a x represent the error between the position measurements provided by the PME 4 and the corresponding unaided position estimates for a period of 60 seconds. In this example the PME 4 experiences a fault at time *t*=150 seconds that causes the position measurements to drift. In this example, only one unaided position estimate x(t) is used for each iteration of the fault detection method. In other words, for the time *t*=120 seconds then the fault detection system will use the buffered acceleration data for the preceding 60 seconds (i.e. for the time *t*=61 to time *t*=120) to derive a series of unaided position estimates *x*(*t=61*)*...x*(*t*=119)*, x*(*t*=120) but only the final unaided position estimate *x*(*t*=120) is used to determine the error between *x*(*t*=120) and the position measurement *p*(*t*=120) which is then shown on the graph. The remaining unaided position estimates *x*(*t*=61)...x(*t*=119) are not used but will, of course, influence the final unaided position estimate *x*(*t*=120) because of the way in which subsequent unaided position estimates are derived with reference to the previous unaided position estimate in function blocks 18. The errors shown in Figure 5 between the final unaided positions estimates *x*(*t*=121)*...x*(*t*=180) and the corresponding position measurements *p*(*t*=121)...*p*(*t*=180) are derived in the same way.

The dashed horizontal line represents an error threshold for fault detection (i.e. *m*=5 metres).

At time *t*=130 seconds then it can be seen that the error between position measurement *p*(*t*=130) provided by the PME 2 and the unaided position estimate *x*(*t*=130) derived from the unaided solution function block 12 exceeds the error threshold but a fault is not detected.

The dotted vertical line at *t*=169 seconds represents a detected fault where three consecutive errors provided by the PME 2 have exceeded the error threshold. If a fault is detected then the PME may be isolated from the DP system until it has been checked and repaired.

It will be readily appreciated that other techniques and algorithms for fault detection can be used.

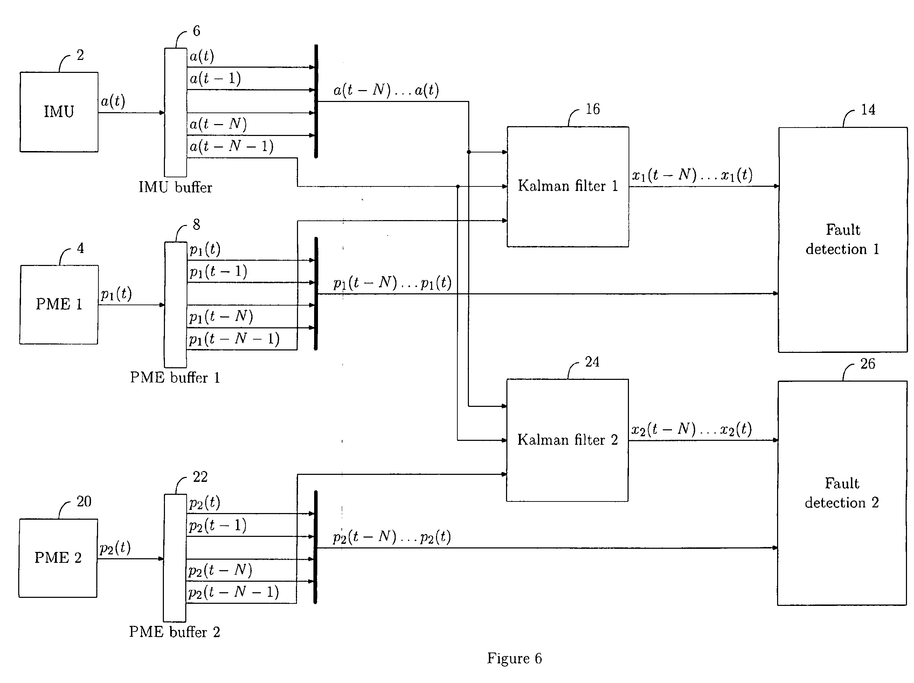

A second fault detection system will now be described with reference to Figure 6. The second fault detection system is broadly similar to the first fault detection system but includes two separate PME located in parallel.

Position measurements are provided by a first PME 4 and a second PME 20. Position measurements *p*₁(*t*) are provided by the first PME 4 and stored in a first PME buffer 8 while position measurements *p*₂(*t*) are provided by the second PME 20 and stored in a second PME buffer 22. The position measurements *p*₁(*t*) provided by the first PME 4 are used as described above with an aided position estimate for an iteration at time *t* being derived from position measurement *p*₁(*t-*(*N*+1)) in a first Kalman filter 16 and all or part of a series of position measurements *p*₁(*t-N*)*...p*₁(*t-1*)*,p*₁(*t*) being compared with all or part of a series of unaided position estimates *x*₁*(t-*N*) ... x*₁(*t*-1)*, x*₁(*t*) in a first fault detection function block 14.

The position measurements *p*₂(*t*) provided by the second PME 20 are used in parallel with an aided position estimate for an iteration at time *t* being derived from position measurement *p*₂(*t-*(*N*+1)) in a second Kalman filter 24 and all or part of a series of position measurements *p₂*(*t-N*)*...p₂*(*t*-1)*, p₂*(*t*) being compared with all or part of a series of unaided position estimates *x₂*(*t-*N)*...x₂*(*t*-1)*, x₂*(*t*) in a second fault detection function block 26. Such a fault detection system derives separate aided and unaided position estimates for each PME in parallel using the same inertial measurements from the IMU 2 and is therefore capable of identifying faults independently in either PME.

Although Figure 6 shows two PME it will be readily appreciated that any number of PME can be connected together in parallel together with an associated PME buffer, Kalman filter and fault detection function block.

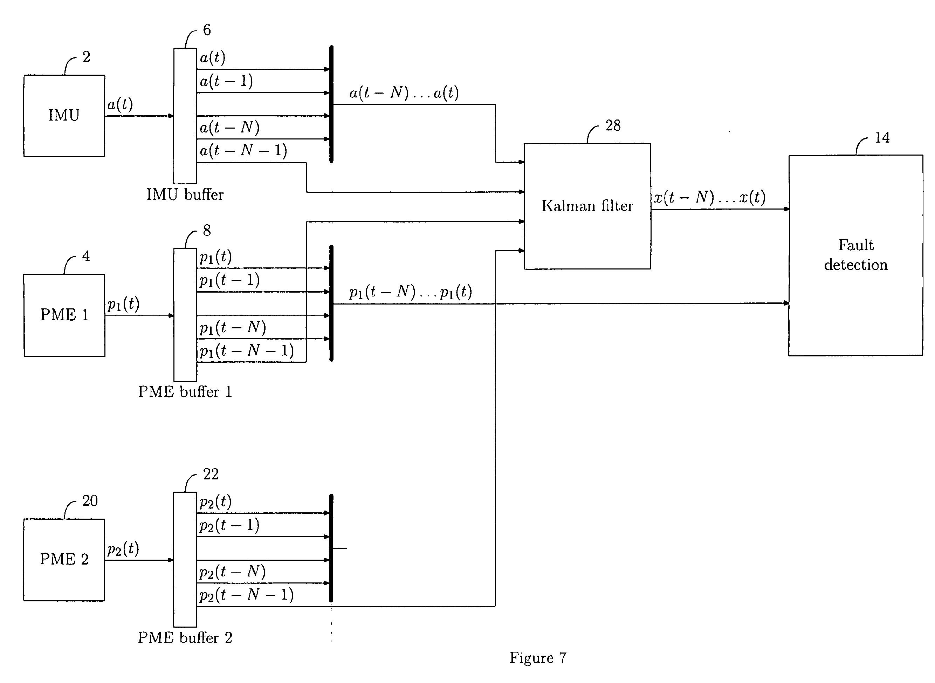

A third fault detection system will now be described with reference to Figure 7. The second fault detection system is broadly similar to the first fault detection system but includes two separate PME that both provide position measurements for the purpose of deriving the aided position estimates.

The position measurements *p*₁(*t*) provided by the first PME 4 are used as described above with an aided position estimate for an iteration at time *t* being derived from position measurement *p*₁*(t-(N+1))* in the Kalman filter 28 and compared with all or part of a series of unaided position estimates *x*(*t*-N)...*x*(*t*-1), x(*t*) in the fault detection function block 14. However, the aided position estimate for the iteration at time *t* is also derived from position measurement *p*₂(*t*-(*N*+1)) provided by the second PME 20. The subsequent position measurements *p*₂(*t*-*N*)...*p*₂(*t*-1),*p*₂(*t*) are buffered but are not used by the fault detection method. As a result, only a fault in the first PME 4 can be detected by the third fault detection system. The buffered position measurements *p₂*(*t-N*)*...p₂*(*t*-1)*,p₂*(*t*) may be used by the DP system, for example.

With reference to Figure 2 then the position measurements *p*₁(*t*) and *p*₂(*t*) provided by the first and second PME can be combined (e.g. to provide a weighted combination or average) which is then used to derive the error e₂(*t*).

In an alternative arrangement, a switch array can be used to select one or both of the position measurements *p*₁(*t*) and *p*₂(*t*) to derive the aided position estimate. Although Figure 7 shows two PME it will be readily appreciated that the position measurements from any number of PME can be used to derive each aided position estimate. A switch array (not shown) can be used to select one or more of the available position measurements to derive the aided position estimate in the Kalman filter 28. If two or more position measurements are selected then they can be combined (e.g. to provide a weighted combination or average) as described above.

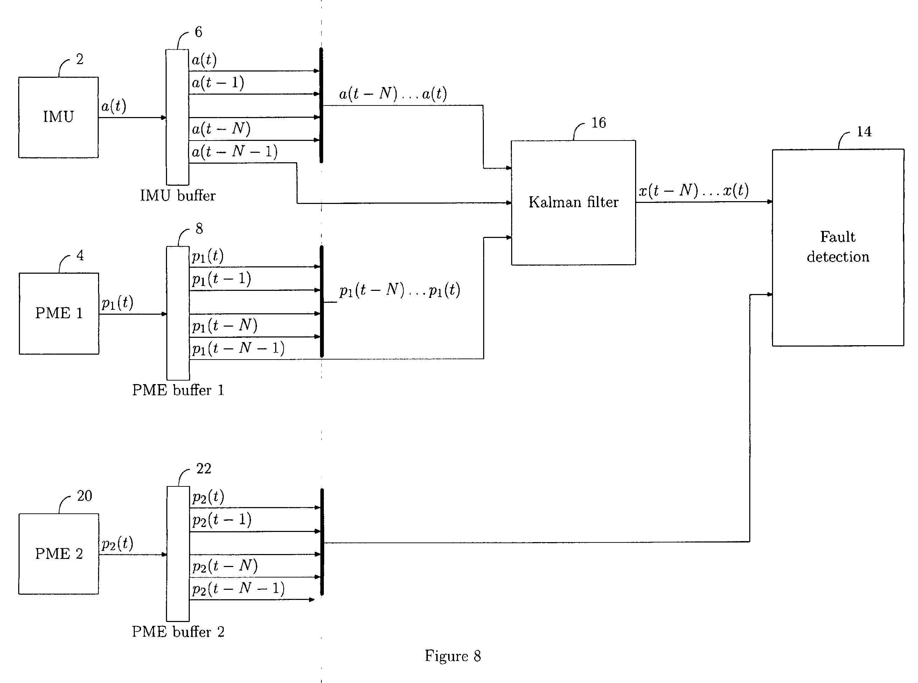

A fourth fault detection system will now be described with reference to Figure 8. The fourth fault detection system is broadly similar to the third fault detection system but the position measurements provided by one PME are used for the purpose of deriving the aided position estimates while the position measurements provided by another PME are used for fault detection. In other words, in the third fault detection system at least one PME provides position measurements that are used both for the purpose of deriving the aided position estimates and for fault detection, but in the fourth fault detection system the PME that is being checked for faults does not provide the position measurements that are used to derive the aided position estimates.

The position measurements *p*₁(*t*) provided by the first PME 4 are used as described above with an aided position estimate for an iteration at time *t* being derived from position measurement *p*₁(*t-*(*N*+1)) in the Kalman filter 16. However, the position measurements *p*₁(*t*) are not provided to the fault detection function block 14. The subsequent position measurements *p*₁(*t-N*)*...p*₁(*t*-1)*, p*₁(*t*) are buffered but are not used by the fault detection method. The buffered position measurements *p*₁(*t-N*)*...p*₁(*t*-1)*, p*₁(*t*) may be used by the DP system, for example.

The position measurements *p*₂(*t*) provided by the second PME 20 are stored in the PME buffer 22. All or part of the series of position measurement *p*₂(*t-N)...p*₂(*t*-1)*, p*₂(*t*) are then supplied to the fault detection function block 14 and are compared with all or part of a series of unaided position estimates *x*(*t-N*)...*x*(*t*-1)*, x(t)* that is derived using the aided position estimate and the series of acceleration vectors *α*(*t-N*)*...α*(*t*-1)*, α*(*t*) provided by the IMU 2. As a result, only a fault in the second PME 20 can be detected by the fourth fault detection system.

The second, third and fourth fault detection systems can be used in combination with the position measurements from one or more PME being used to derive the aided position estimate but with the option to detect faults in one or more PME. In this case one or more switch arrays can also be used to determine which position measurements are used to derive the aided position estimates and which of the buffered position measurements are provided to a fault detection function block to be used for fault detection purposes.

## Claims

1. A method of using inertial measurements provided by an inertial measurement unit (2) to detect a fault in position measurement equipment (4) providing position or velocity measurements, the method comprising the steps of:
using at least one inertial measurement (*α*(*t-N*)*...α*(*t*)) to derive at least one unaided position or velocity estimate (*x*(*t-N*)...*x*(*t*)); and
comparing the at least one unaided position or velocity estimate (*x*(*t-N*)*...x*(*t*)) with at least one position or velocity measurement (*p*(*t-N*)...*p*(*t*)) provided by the position measurement equipment (4) to determine if there is a fault in the position measurement equipment (4).

2. A method according to claim 1, further comprising the step of using an earlier inertial measurement (*a*(*t*-(*N*+1)) and an earlier position or velocity measurement *(p(t-(N*+1)) to derive an aided position or velocity estimate (*x'*(*t-N*+1)) and using that aided position or velocity estimate as a start condition to the step of using the at least one inertial measurement (*α*(*t-N*)*...α*(*t*)) to derive the at least one unaided position or velocity estimate (*x*(*t-N*)*...x*(*t*))*.*

3. A method according to claim 1 or claim 2, wherein inertial measurements (*α*(*t-N*)...*α*(*t*)) provided by the inertial measurement unit (2) are stored in a buffer (6).

4. A method according to any preceding claim, wherein position or velocity measurements (*p*(*t-N*)*...p*(*t*)) provided by the position measurement equipment (4) are stored in a buffer (8).

5. A method according to any preceding claim, wherein the step of using at least one inertial measurement (*α*(*t-N*)*...α*(*t*)) to derive at least one unaided position or velocity estimate (*x*(*t-N*)*...x*(*t*)) for time *t* further comprises the steps of:
(i) deriving an aided position or velocity estimate (*x'*(*t-N*+1)) for time *t-(N*+1) from an inertial measurement (*a*(*t-N*+1)) for time *t-*(*N*+1) and a position or velocity measurement (p(t-N+ 1)) for time *t-*(*N*+1); and
(ii) using the aided position or velocity estimate (*x'*(*t-N*+1)) for time *t-*(*N*+1) as a start condition to a process (18a-18d) that derives the at least one unaided position or velocity estimate *(x(t-N)...x(t))* from stored inertial measurements (*α*(*t-N*)*...α*(*t*)) for time *t-N* to time *t*.

6. A method according to any preceding claim, wherein a series of stored inertial measurements (*α*(*t-N*)*...α*(*t*)) are used to derive one unaided position or velocity estimate (x(t)) for time *t* which is compared with one position or velocity measurement (*p*(*t*)) for time *t* to determine if there is a fault in the position measurement equipment (4).

7. A method according to any of claims 1 to 5, wherein a series of stored inertial measurements (*α*(*t-N*)*...α*(*t*)) are used to derive a series of unaided position or velocity estimates *(x(t-N)...x(t))* for time *t-N* to time *t* and where all or part of the series of unaided position or velocity estimates *(x(t-N)...x(t))* is compared with all or part of a series of stored position or velocity measurements (*p*(*t-N*)*...p*(*t*)) for time *t-N* to time *t* to determine if there is a fault in the position measurement equipment (4).

8. A method according to any preceding claim, wherein the at least one unaided position or velocity estimate (*x*(*t-N*)*...x*(*t*)) is derived using a recursive algorithm.

9. A method according to claim 2, wherein the aided position or velocity estimate (*x'*(*t-N*+1)) is derived using a recursive algorithm.

10. A method according to claim 8 or claim 9, wherein the recursive algorithm is a Kalman filter (10, 12).

11. A method according to claim 1 with a plurality of position measurement equipment (4, 20) each providing position or velocity measurements, further comprising the step of using an earlier inertial measurement (*α*(*t-*(*N*+1)) and an earlier position or velocity measurement *(p*₁(*t-*(*N*+1)*,p*₂(*t-*(*N*+1)) provided by at least one of the plurality of position measurement equipment (4, 20) to derive an aided position or velocity estimate (*x'*(*t-N*+1)) and using that aided position or velocity estimate as a start condition to the step of using the at least one inertial measurement (*α*(*t-N*)*...α*(*t*)) to derive the at least one unaided position or velocity estimate (*x*(*t-N*)*...x*(*t*))*.*

12. A method according to claim 1 with a plurality of position measurement equipment (4, 20) each providing position or velocity measurements, wherein the step of using at least one inertial measurement (*α*(*t-N*)*...α*(*t*)) to derive at least one unaided position or velocity estimate (*x*(*t*-*N)...x*(*t*)) for time *t* further comprises the steps of:
(i) deriving an aided position or velocity estimate (*x'*(*t-N*+1)) for time *t-*(*N*+1) from an inertial measurement (*α*(*t-N*+1)) for time *t-*(*N*+1) and a position or velocity measurement (*p*₁(*t-N*+1)*, p*₂(*t-N*+1)) for time *t-*(*N*+1) provided by at least one of the plurality of position measurement equipment (4, 20); and
(ii) using the aided position or velocity estimate (*x'*(*t-N*+1)) for time *t-(N*+ 1) as a start condition to a process that derives the at least one unaided position or velocity estimate (*x*(*t-N*)*...x*(*t*)) from stored inertial measurements (*α*(*t-N*)*...α*(*t*)) for time *t-N* to time *t*.

13. A method according to claim 11 or claim 12, wherein position or velocity measurements (*p*₁(*t-N*+1)*, p*₂(*t-N*+1)) from two or more of the plurality of position measurement equipment (4, 20) are combined together and used to derive the aided position or velocity estimate.

14. A method according to claim 11, wherein the at least one unaided position or velocity estimate (*x*(*t-N*)*...x*(*t*)) is compared with at least one position or velocity measurement (*p*₁(*t-N*)*...p*₁(*t*)*, p*₂(*t-N*)*...p*₂(*t*)) provided by at least another one of the position measurement equipment (4, 20) to determine if there is a fault in said at least another one of the position measurement equipment (4, 20).

15. A fault detection system comprising:
an inertial measurement unit (2) providing inertial measurements (*α*(*t-N*)*...α+*(*t*));
at least one position measurement equipment (4) providing position or velocity measurements (*p*(*t-N*)*...p*(*t*))*;*
means (12) for deriving at least one unaided position or velocity estimate *(x(t-N)...x(t))* using at least one inertial measurement (*α*(*t-N*)*...α*(*t*)); and
means (14) for comparing the at least one unaided position or velocity estimate (*x*(*t*-N)...*x*(*t*)) with at least one position or velocity measurement (*p*(*t-N*)*...p*(*t*)) provided by the position measurement equipment (4) to determine if there is a fault in the position measurement equipment (4).

16. A fault detection system according to claim 15, further comprising means (10) for deriving an aided position or velocity estimate (*x*'(*t-N*+1)) using an earlier inertial measurement (*α*(*t-N*+1)) and an earlier position or velocity measurement (*p*(*t-N*+1))*.*

17. A fault detection system according to claim 15 or claim 16, further comprising a buffer (6) for storing inertial measurements (*α*(*t-N*)...*α*(*t*)) provided by the inertial measurement unit (2).

18. A fault detection system according to any of claims 15 to 17, further comprising a buffer (8) for storing position or velocity measurements (*p*(*t-N)...p*(*t*)) provided by the position measurement equipment (4).

19. A fault detection system according to any of claims 15 to 18, wherein the means (12) for deriving at least one unaided position or velocity estimate (*x*(*t-N*)*...x*(*t*)) using at least one inertial measurement (*α*(*t-N*)*...α*(*t*)) is a Kalman filter (16).

20. A fault detection system according to claim 16, wherein the means (10) for deriving an aided position or velocity estimate (*x*'(*t-N*+1)) using an earlier inertial measurement (*α*(*t-N*+1)) and an earlier position or velocity measurement (*p*(*t-N*+1)) is a Kalman filter (16).
